# EUROPEAN PATENT SPECIFICATION

(11) **EP 3 081 360 B1**
(45) Date of publication and mention of the grant of the patent: **09.05.2018**
(21) Application number: 15871287.7
(22) Date of filing: 20.01.2015
(51) Int. Cl.: B29C 33/02, B29C 35/02, B29D 30/06, B29K 105/24

(54) **TIRE VULCANIZER**
REIFENVULKANISATOR
VULCANISEUR DE PNEUMATIQUE

(43) Date of publication of application: 19.10.2016
(73) Proprietor: Mitsubishi Heavy Industries Machinery Systems, Ltd., Hyogo-ku Kobe-shi (JP)
(72) Inventor: KAJITANI, Fumito, Tokyo 108-8215 (JP); YOKOO, Kazutoshi, Tokyo 108-8215 (JP); SHINTANI, Koji, Hiroshima-shi Hiroshima 733-8553 (JP)
(74) Representative: Henkel, Breuer & Partner
(86) International application number: PCT/JP2015/051329
(87) International publication number: WO 2016/117020

(56) References cited:
- WO-A1-2014/190605
- JP-A- H05 104 541
- JP-A- H09 123 172
- JP-A- 2001 322 128
- JP-A- 2002 018 857
- JP-A- 2011 116 062
- JP-A- 2011 218 703
- JP-A- 2013 006 366

## Description

### Technical Field

The present invention relates to a tire vulcanizing apparatus.

### Background Art

In the related art, a green tire which is molded by a molding machine is vulcanized and molded by a vulcanizing apparatus. For example, JP 4387047B discloses a center mechanism having heat generation means which is attached to be movable inside a green tire so as to intensively heat a thick portion of the green tire.

JP H09-123172A discloses a tire vulcanizing apparatus with a heating portion for heating a green tire from an inside which comprises a heating wire coiled around supporting rods attached to a link mechanism. The heating portion is divided into various heating wire segments in the tread width direction.

JP 2011-218703A discloses tire vulcanizing apparatus with a heating portion that is inclined with respect to a center line of a rotatable center post and is otherwise more or less rod-shaped. Following the rotation of the heating portion the circumference of the inner part of the green tire is heated in different extent, i.e. more at the bead portions as compared to the tread portion.

JP 2002-018857A discloses a further tire vulcanizing apparatus on which the preamble portion of the claim is based with a heating portion in the form of a radiation source that is pivotable about a pivot axis that is located in a center plane of the green tire perpendicular to a vertical center line of a center post.

### Summary of Invention

### Technical Problem

However, in the technology which is disclosed in JP 4387047B, since the heating means for performing local heating on the inner surface of the green tire is provided so as to be movable, there is a concern that unevenness in heating with respect to the green tire may occur.

The present invention is made in consideration of the above-described circumstances, and an object thereof is to provide a tire vulcanizing apparatus in which unevenness in heating with respect to the green tire decreases.

### Solution to Problem

According to the present invention, there is provided a tire vulcanizing apparatus with the features of the claim, including: a bead ring which supports a green tire; and a heating portion which heats the green tire by radiation heat of radiation heat amounts different from each other in a tread width direction of the green tire from the inside of the green tire supported by the bead ring.

Since the tire vulcanizing apparatus heats the green tire by radiation heat of radiation heat amounts different from each other in the tread width direction of the green tire, it is possible to continuously apply an optimal heat according to a kind of rubber, a thickness, or a shape in the tread width direction of the green tire to the green tire.

The heating portion includes a plurality of radiators which are disposed to be arranged in the tread width direction and are independently controllable such that the radiation heat amounts are different from each other. Since each of the radiation heat amounts from the plurality of radiators can be changed, it is possible to apply uniform heat to a plurality of kinds of green tires in which kinds of rubber, thicknesses, or shapes are different from each other.

### Advantageous Effects of Invention

According to the present invention, it is possible to provide the tire vulcanizing apparatus in which unevenness in heating with respect to the green tire decreases.

### Brief Description of Drawings

Fig. 1 is a partial sectional view showing a tire vulcanizing apparatus according to an example serving to explain certain features of the present invention.
Fig. 2 is a partial sectional view showing a tire vulcanizing apparatus of a modification example of the example.
Fig. 3 is a partial sectional view showing a tire vulcanizing apparatus according to an embodiment of the present invention.
Fig. 4 is a perspective view showing a heater of the tire vulcanizing apparatuses of the embodiment. Description of Examples and Embodiments

### (Example)

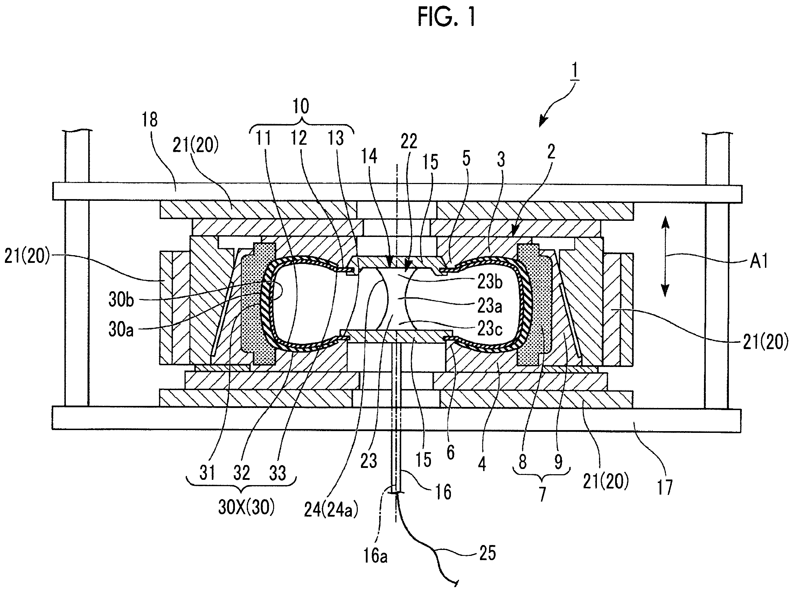

An example serving to explain certain features of the present invention is described. Fig. 1 is a partial sectional view showing a tire vulcanizing apparatus according to the example.

A tire vulcanizing apparatus 1 of the example shown in Fig. 1 includes a tire mold 2, a bladder 10, a center mechanism 14, a mold fixing mechanism 17, a mold lifting and lowering mechanism 18, and a tire heating mechanism 20.

The tire mold 2 includes an upper side mold 3, a lower side mold 4, an upper bead ring 5, a lower bead ring 6, and a tread mold 7.

The upper side mold 3 and the lower side mold 4 are metal molds for molding both side walls 32 of the tire 30. The upper side mold 3 is attached to the mold lifting and lowering mechanism 18. The lower side mold 4 is attached to the mold fixing mechanism 17.

The upper bead ring 5 and the lower bead ring 6 are metal molds for forming both beads 33 of the tire 30.

The tread mold 7 includes a tread segment 8 and a slide segment 9.

The tread segment 8 is a metal mold which transfers a tread pattern to the tread portion 31 of the green tire 30X.

The slide segment 9 holds the tread segment 8 such that the tread segment 8 is movable in a radial direction of the tire 30. The slide segment 9 is connected to the mold lifting and lowering mechanism 18.

In addition, the configuration of the tire mold 2 is not limited to the above-described configuration. For example, the configuration of the tire mold 2 may be appropriately selected according to a shape of a produced tire or the like.

A bladder 10 is a hollow member for pressing the green tire 30X disposed inside the tire mold 2 to the tire mold 2 from the inside when the tire vulcanizing apparatus 1 is used. The bladder 10 includes a main body portion 11 which has a shape corresponding to the inner surface shape of the tire 30 vulcanized and molded by the tire vulcanizing apparatus 1 of the example, and an upper clamp portion 12 and a lower clamp portion 13 which are connected to the center mechanism 14. The inner portion of the bladder 10 is filled with gas such as high-temperature steam, the bladder 10 presses the inner surface of the green tire 30X, and heat of the high-temperature steam is transmitted to the inner surface of the green tire 30X via the bladder 10.

In addition, the configuration of the bladder 10 is not limited to the above-described configuration.

The center mechanism 14 includes a pair of bladder clamp rings 15 which is connected the upper clamp portion 12 and the lower clamp portion 13 of the bladder 10, and a center post 16 which is connected to the pair of bladder clamp rings 15. The center mechanism 14 moves the pair of bladder clamp rings 15 relative to each other in a center line 16a direction of the center post 16, and displaces the bladder 10 such that the bladder 10 is inserted into and detached from the green tire 30X.

Moreover, the configuration of the center mechanism 14 is not limited to the above-described configuration.

The mold fixing mechanism 17 may appropriately select a known configuration capable of supporting the center mechanism 14 and the lower side mold 4.

The mold lifting and lowering mechanism 18 causes the upper side mold 3 and the tread mold 7 to move forward and backward with respect to the lower side mold 4 in the center line 16a direction of the center post 16. Moreover, in the example, the slide segment 9 of the tread mold 7 moves toward the center post 16 side as the mold lifting and lowering mechanism 18 causes the tread mold 7 to approach the mold fixing mechanism 17.

In addition, the configuration of the mold lifting and lowering mechanism 18 is not limited to the above-described configuration.

The tire heating mechanism 20 includes an outer heating mechanism 21 which heats the green tire 30X from the outer surface 30a side of the green tire 30X via the upper side mold 3, the lower side mold 4, and the tread mold 7, and an inner heating mechanism 22 which is attached to the center post 16 and heats the green tire 30X from the inner surface 30b side of the green tire 30X.

For example, the outer heating mechanism 21 has a high-temperature steam channel, and heats the green tire 30X from the outside by the heat of the high-temperature steam. In addition, the configuration of the outer heating mechanism 21 is not limited to the above-described configuration.

The inner heating mechanism 22 includes a heater (heating portion) 23 which is attached to the center post 16, and a wire 25 which supplies power to the heater 23.

The heater 23 heats the green tire 30X supported by the upper and lower bead rings 5 and 6 from the inside of the green tire 30X by radiation heat of radiation heat amounts which are different from each other in a tread width direction A1 of the green tire 30X. In the example, the heater 23 heats the green tire 30X via the bladder 10. In addition, in a case where the tire vulcanizing apparatus 1 does not include the bladder 10, the heater 23 may directly heat the green tire 30X from the inside of the green tire 30X.

An radiation surface 24 which emits radiation heat toward the inner surface 30b of the green tire 30X is formed on the heater 23. The heat emitted from the heater 23 mainly radiates in a normal direction of the radiation surface 24. In the example, the radiation surface 24 of the heater 23 is configured according to a kind of rubber, a thickness, or a shape of the tire 30.

For example, the radiation surface 24 of the heater 23 faces a region required to be heated relatively more in order to uniformly heat the entire green tire 30X. For example, the radiation surface 24 of the heater 23 includes a surface 24a which faces a portion having a thick rubber thickness such that more radiation heat is transmitted to the portion having a thick rubber thickness in the green tire 30X relative to a portion having a thin rubber thickness.

In addition, the configuration of the radiation surface 24 is not limited to the above-described configuration. In another example of the configuration of the radiation surface 24, in a case where kinds of rubber of the green tire 30X are different from each other according to portions, the radiation surface 24 of the heater 23 has a surface which faces a portion which is configured of a rubber having a high vulcanization temperature such that more radiation heat is transmitted to the portion which is configured of a rubber having a higher vulcanization temperature relative to a portion which is configured of a portion having a lower vulcanization temperature.

As still another example, the radiation surface 24 of the heater 23 has a surface which is defined according to a distance between the heater 23 and the inner surface 30b of the green tire 30X such that more radiation heat is transmitted to a portion positioned at a position far from the heater 23 corresponding to the size of the green tire 30X relative to a portion positioned at a position close to the heater 23.

The shape of the heater 23 is not particularly limited as long as it has the radiation surface 24. For example, as an example of the shape of the heater 23, the heater 23 is formed in an approximately rod shape which is long in the tread width direction A1 of the green tire 30X in a state where the green tire 30X is disposed in the tire mold 2. Specifically, the heater 23 is formed in a rotary body shape which has a straight line (the center line 16a of the center post 16 in the example) extending in the tread width direction A1 as a center. Moreover, in the heater 23, an intermediate portion 23a in the center line 16a direction of the center post 16 has a small diameter, and an end 23b close to the upper bead ring 5 in the center line 16a direction of the center post 16 and an end 23c close to the lower bead ring 6 in the center line 16a direction have larger diameters than the diameter of the intermediate portion 23a. In addition, the diameter of the heater 23 gradually increases from the intermediate portion 23a in the heater 23 toward both ends 23b and 23c. In the above-described example, the radiation surface 24 of the heater 23 is configured of an outer circumferential surface of a rotary body having the center line 16a of the center post 16 as a center. The radiation surface 24 of the heater 23 is configured of a curved surface having a shape in which the intermediate portion on the outer circumferential surface of the column is recessed over the entire circumference in the center line direction so as to configure a convex curved surface toward the inside in the radial direction (that is, the center line 16a side of the center post 16 in the example) of the green tire 30X in a state where the green tire 30X is disposed in the tire mold 2.

In the heater 23, the known heat generation method which receives a supply of power to generate heat may be appropriately selected so as to be applied. That is, as the heater 23 of the example, an infrared heater, a ceramic heater, a carbon heater, or the like may be adopted. Preferably, the wavelength of the radiation heat from the heater 23 is a wavelength capable of effectively heating the bladder 10 according to absorption wavelength characteristics of the bladder 10.

The wire 25 is disposed inside the center post 16 and is connected to the heater 23 and a power supply (not shown).

An operation of the tire vulcanizing apparatus 1 of the example is described.

When the tire vulcanizing apparatus 1 of the example is used, as shown in Fig. 1, the green tire 30X is placed on the lower side mold 4 in a state where the bladder 10 and the heater 23 are disposed inside the green tire 30X. In addition, the tread mold 7 and the upper side mold 3 are attached so as to cover the outer surface 30a of the green tire 30X.

After the tire mold 2 is completely closed, the outer heating mechanism 21 heats the green tire 30X from the outer surface 30a of the green tire 30X via the upper side mold 3, the lower side mold 4, and the tread mold 7. In addition, gas such as high-temperature steam is supplied to the bladder 10 so as to be advanced, and the outer surface 30a of the green tire 30X is pressed to the inner surface of the tire mold 2 by the bladder 10. The green tire 30X is heated from the inner surface 30b of the green tire 30X by the heat of the high-temperature steam or the like inside the bladder 10.

Moreover, in the example, power is supplied to the heater 23 of the inner heating mechanism 22, and the green tire 30X is further heated by radiation heat radiated from the radiation surface 24 of the heater 23 via the bladder 10 from the inner surface 30b of the green tire 30X.

The high-temperature steam or the like which fills the inner portion of the bladder 10 flows in the bladder 10 so as to approximately uniformly heat the inner surface of the bladder 10. Meanwhile, the heater 23 transmits the radiation heat in a predetermined direction which is defined by the radiation surface 24 of the heater 23. In order to the uniformly heat the entire green tire 30X by heating of the green tire 30X using the high-temperature steam or the like and heating of the green tire 30X using the heater 23, a region which is required to be heated relatively more is heated.

In addition, the gas which fills the inner portion of the bladder 10 may not be the high-temperature steam. In this case, it is possible to heat the green tire 30X by heating the bladder 10 using the heater 23 while performing pressurization by gas (for example, inert gas such as nitrogen) which fills the inner portion of the bladder 10.

The green tire 30X is vulcanized and molded in the tire mold 2 by the high-temperature steam, the heater 23, and the outer heating mechanism 21.

As described above, according to the tire vulcanizing apparatus 1 of the example, since the heater 23 of the inner heating mechanism 22 continuously heats the inner surface 30b of the green tire 30X in the tread width direction A1, it is possible to vulcanize and mold the tire 30 in a state where unevenness in heating with respect to the green tire 30X decreases.

Moreover, in the example, since the radiation surface 24 of the heater 23 is a curved surface, it is possible to continuously transmit the radiation heat to the inner surface 30b of the green tire 30X according to the kind of rubber, the thickness, or the shape of the green tire 30X in the tread width direction A1 of the green tire 30X and the circumferential direction of the green tire 30X.

Moreover, since the diameter of the heater 23 gradually increases from the intermediate portion in the center line direction toward both ends in the heater 23 of the tire vulcanizing apparatus 1 of the example, it is possible to transmit more heat from the radiation surface 24 of the heater 23 to the tread portion 31 of the green tire 30X relative to the side wall 32 of the green tire 30X.

### (Modification Example)

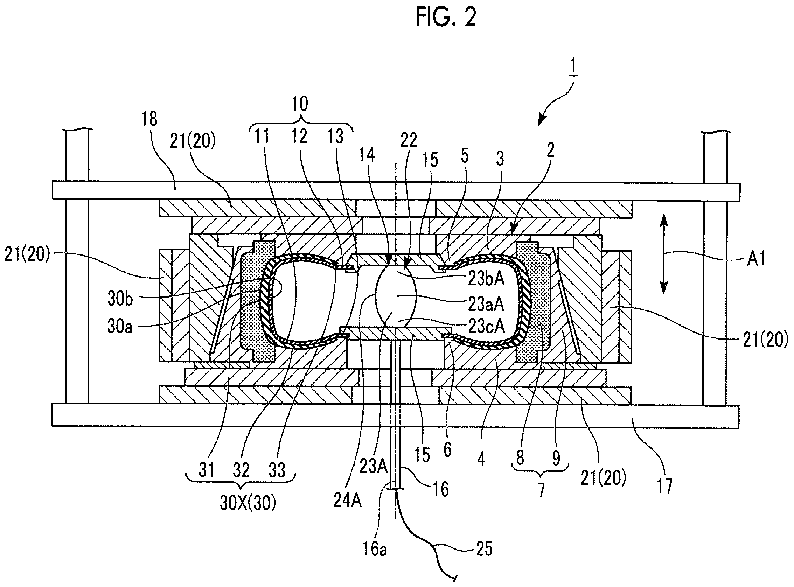

Next, a modification example of the example is described. Fig. 2 is a partial sectional view showing a tire vulcanizing apparatus of the present modification example.

As shown in Fig. 2, in the present modification example, a heater 23A having a shape different from the shape of the heater 23 (refer to Fig. 1) is provided instead of the heater 23.

The heater 23A of the present modification example is formed in an approximately spindle shape which is long in the tread width direction A1 of the green tire 30X in a state where the green tire 30X is disposed inside the tire mold 2. Specifically, the heater 23A is formed in a spindle shape which has the center line 16a of the center post 16 as a center. That is, in the heater 23A, an intermediate portion 23aA in the center line 16a direction of the center post 16 has a large diameter, and an end 23bA which is close to the upper bead ring 5 and an end 23cA which is close to the lower bead ring 6 in the center line 16a direction of the center post 16 have diameters which are smaller than the diameter of the intermediate portion 23aA. Moreover, the diameter of the heater 23A gradually decreases from the intermediate portion 23aA toward both ends 23bA and 23cA in the heater 23A. A radiation surface 24A of the heater 23A in the present modification example is configured of the outer circumferential surface of the spindle-shaped heater 23A which has the center line 16a of the center post 16 as a center. The radiation surface 24A of the heater 23A is configured of a curved surface having a shape in which the intermediate portion on the outer circumferential surface of the column is expanded over the entire circumference in a direction opposite to the center line so as to be convex toward the outside in the radial direction of the green tire 30X in a state where the green tire 30X is disposed in the tire mold 2.

In the heater 23A of the present modification example, it is possible to approximately uniformly radiate radiation heat to the inner surfaces of both side walls 32 and the tread portion 31 of the green tire 30X.

### (Embodiment)

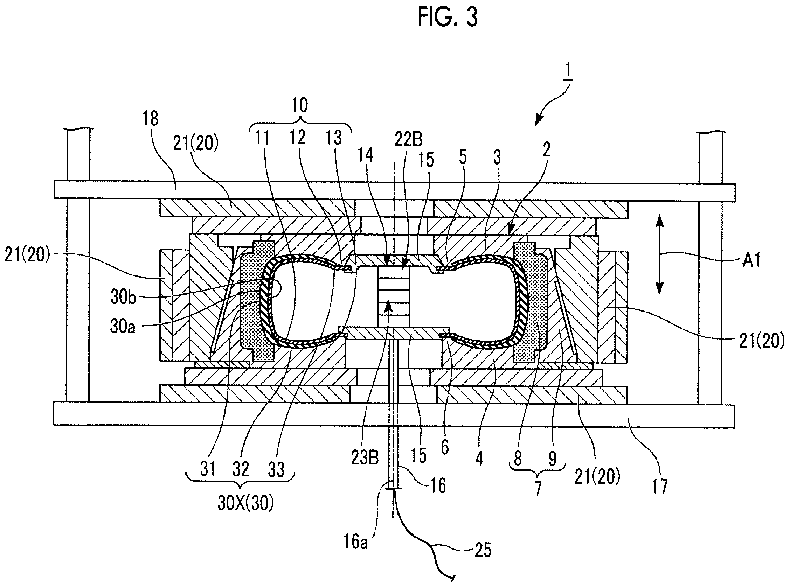

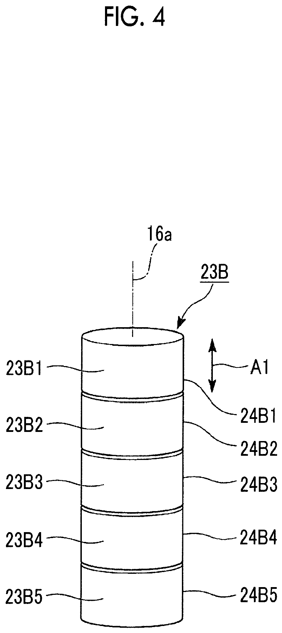

An embodiment of the present invention is described. Fig. 3 is a partial sectional view showing a tire vulcanizing apparatus of the present embodiment. Fig. 4 is a perspective view showing a heater of the tire vulcanizing apparatus of the present embodiment.

The tire vulcanizing apparatus 1 of the present embodiment shown in Fig. 3 includes an inner heating mechanism 22B, which has a configuration different from the configuration of the inner heating mechanism 22 described in the example, instead of the inner heating mechanism 22 described in the example.

As shown in Fig. 4, the inner heating mechanism 22B includes a plurality of heaters (radiators) 23B (in the present embodiment, first heater 23B1, second heater 23B2, third heater 23B3, fourth heater 23B4, and fifth heater 23B5), and a control unit (not shown) which controls a heat generation state with respect to the plurality of heaters 23B.

The controls of the heat generation in the plurality of heaters 23B are performed independently of each other. As shown in Fig. 3, the plurality of heaters 23B are provided so as to be arranged in the tread width direction A1 of the green tire 30X in a state where the green tire 30X is disposed in the tire mold 2. In the present embodiment, the plurality of heaters 23B are coaxially arranged with the center line 16a of the center post 16. The plurality of heaters 23B includes radiation surfaces 24B (first radiation surface 24B1, second radiation surface 24B2, third radiation surface 24B3, fourth radiation surface 24B4, and fifth radiation surface 24B5) which are configured of an outer surface of a column which has the center line 16a of the center post 16 as the center.

In the present embodiment, by controlling the heat generation states of the first heater 23B1, the second heater 23B2, the third heater 23B3, the fourth heater 23B4, and the fifth heater 23B5 using the control unit (not shown), effects similar to those of the heater 23 and the heater 23A described in the example and the modification example thereof are exerted. Moreover, in the present embodiment, it is possible to easily set a radiation heat amount suitable for the tire 30 which is asymmetrically configured in the tread width direction A1 of the tire 30.

### Industrial Applicability

The present invention can be used in an apparatus which vulcanizes and molds a tire.

### Reference Signs List

- 1:: tire vulcanizing apparatus
- 2:: tire mold
- 3:: upper side mold
- 4:: lower side mold
- 5:: upper bead ring
- 6:: lower bead ring
- 7:: tread mold
- 8:: tread segment
- 9:: slide segment
- 10:: bladder
- 11:: main body portion
- 12:: upper clamp portion
- 13:: lower clamp portion
- 14:: center mechanism
- 15:: bladder clamp ring
- 16:: center post
- 17:: mold fixing mechanism
- 18:: mold lifting and lowering mechanism
- 20:: tire heating mechanism
- 21:: outer heating mechanism
- 22:: inner heating mechanism
- 22B:: inner heating mechanism
- 23, 23A, 23B:: heater
- 23B1:: first heater
- 23B2:: second heater
- 23B3:: third heater
- 23B4:: fourth heater
- 23B5:: fifth heater
- 24, 24A, 24B:: radiation surface
- 24B1:: first radiation surface
- 24B2:: second radiation surface
- 24B3:: third radiation surface
- 24B4:: fourth radiation surface
- 24B5:: fifth radiation surface
- 25:: wire
- 30:: tire
- 30X:: green tire
- 31:: tread portion
- 32:: side wall
- 33:: bead

## Claims

1. A tire vulcanizing apparatus comprising:
a bead ring (5,6) which, in operation, supports a green tire (30X); and
a heating portion (23B) which, in operation, heats the green tire (30X) by radiation heat of radiation heat amounts different from each other in a tread width direction (A1) of the green tire (30X) from the inside of the green tire (30X) supported by the bead ring (5,6),
**characterized in that** the heating portion includes a plurality of radiators (23B) which are disposed to be arranged in the tread width direction (A1) and are independently controllable such that the radiation heat amounts are different from each other.

## Patentansprüche

1. Eine Reifenvulkanisiervorrichtung mit:
einen Wulstring (5,6), der im Betrieb einen Reifenrohling (30X) trägt, und
einem Heizabschnitt (23B), der im Betrieb den Reifenrohling (30X) durch Strahlungswärme mit voneinander in einer Profilquerrichtung (A1) des Reifenrohlings (30X) unterschiedlichen Strahlungswärmemengen von der Innenseite des Reifenrohlings (30X), der durch den Wulstring (5,6) getragen ist, erhitzt,
**dadurch gekennzeichnet, dass** der Heizabschnitt eine Vielzahl von Radiatoren (23B) aufweist, die angeordnet sind, um in der Profilquerrichtung (A1) angeordnet zu werden und die unabhängig so steuerbar sind, dass die Strahlungswärmemengen unterschiedlich voneinander sind.

## Revendications

1. Vulcaniseur de pneumatique, comprenant :
un anneau (5, 6) de bourrelet, qui, en fonctionnement, supporte un pneumatique (30X) cru ; et
une partie (23B) de chauffage, qui, en fonctionnement, chauffe le pneumatique (30X) cru par de la chaleur de rayonnement, en des quantités de chaleur de rayonnement différentes les unes des autres, dans une direction (A1) en largeur de la bande de roulement du pneumatique (30X) cru, à partir de l'intérieur du pneumatique (30X) cru supporté par l'anneau (5, 6) de bourrelet,
**caractérisé en ce que** la partie de chauffage comprend une pluralité de radiateurs (23B), qui sont disposés de manière à être agencés dans la direction (A1) en largeur de la bande de roulement et qui peuvent être commandés indépendamment, de manière à ce que les quantités de chaleur de rayonnement soient différentes les unes des autres.
